# EUROPÄISCHE PATENTSCHRIFT

(11) **EP 1 078 947 B1**
(45) Veröffentlichungstag und Bekanntmachung des Hinweises auf die Patenterteilung: **27.02.2008**
(21) Anmeldenummer: 00116734.5
(22) Anmeldetag: 03.08.2000
(51) Int. Cl.: C08G 75/23, C08L 81/06, C08G 65/40, C08G 65/48, B01D 67/00, B01D 71/68

(54) **Hydrophile Polyethersulfone und Verfahren zu ihrer Herstellung**
Hydrophile polyethersulfones and process for their preparation
Polyéthersulfones et procédé pour leur préparation

(30) Priorität: 26.08.1999 DE 19940590
(43) Veröffentlichungstag der Anmeldung: 28.02.2001
(73) Patentinhaber: Membrana GmbH, 42289 Wuppertal-Barmen (DE)
(72) Erfinder: Gehlen, Arne, 63743 Aschaffenburg (DE); Keul, Helmut, 52074 Aachen (DE); Höcker, Hartwig, 52076 Aachen (DE)
(74) Vertreter: Schröder, Richard

(56) Entgegenhaltungen:
- EP-A- 0 097 370
- US-A- 4 797 457
- US-A- 4 851 121
- US-A- 5 861 471

## Beschreibung

Die Erfindung betrifft hydrophile aromatische Polyethersulfone sowie ein Verfahren zur ihrer Herstellung. Weiterhin betrifft die vorliegende Erfindung Membranen, die solche hydrophilen aromatischen Polyethersulfone enthalten.

Der Einsatz von Polymeren für synthetische Membranen und darauf basierende Trennprozesse ist seit langem bekannt. Neben klassischen Anwendungsgebieten, wie z.B. die Meerwasserentsalzung mittels Umkehrosmose oder die Ultrafiltration von Prozesswässem aus der Elektrotauchlackierung zur Rückgewinnung des Lackes, gewinnen Membranprozesse in den Bereichen Lebensmitteltechnologie, Medizin und Pharmazie zunehmend an Bedeutung. In den letztgenannten Fällen besitzen Membrantrennprozesse den großen Vorteil, dass die zu trennenden Stoffe thermisch nicht belastet oder gar geschädigt werden.

Polymere, die für den Einsatz als Komponenten und Bauteile für medizinische Anwendungen geeignet sind, müssen neben den jeweils notwendigen mechanischen und thermischen Eigenschaften auch medizin-typische Eigenschaften aufweisen, wie
- Sterilisierbarkeit in Autoklaven
- sehr gute Beständigkeit, auch gegen starke Desinfektionsmittel
- Biokompatibilität in Kontakt mit Haut, Gewebe oder Blut.
   Die Sterilisierbarkeit ist für den Einsatz als Membran von wesentlicher Bedeutung. Nicht zuletzt aus sicherheitstechnischen und ökologischen Gründen ist dabei der Dampfsterilisation gegenüber der chemischen Sterilisation durch Strahlung, insbesondere durch Gammastrahlung, der Vorzug zu geben.
   Die Dampfsterilisation erfolgt normalerweise durch etwa ½-stündiges Behandeln der Membran mit Heißdampf von > 110°C. Das Kriterium der Dampfsterilisierbarkeit schränkt deshalb die Zahl der potentiellen Polymere für Membranen stark ein. So lassen sich beispielsweise Membranen aus Polyacrylnitril grundsätzlich nicht dampfsterilisieren, weil die Überschreitung der Glastemperatur des Polymeren zu einer irreversiblen Schädigung des Materials bzw. der Membran führt. Auch hydrolyseempfindliche Polymere, beispielsweise einige Polycarbonbate und Polyamide, überstehen eine Heißdampfsterilisation nicht unbeschadet.
   Bekannt sind dampfsterilisierbare Membranen aus z.B. Polyetherimiden, Poly(ether)sulfonen oder Polyvinylidenfluorid.
   Polyethersulfone erfüllen die Anforderungen an die mechanischen und thermischen Eigenschaften und zeichnen sich durch eine hervorragende Chemikalienresistenz aus.
   Ein großer Nachteil von Membranen auf z.B. Polyethersulfonbasis liegt in der Hydrophobie des Membranmaterials, die eine spontane Benetzung mit wässrigen Medien ausschließt. Infolgedessen muss verhindert werden, dass die Membran vollständig austrocknet oder die Membran muss vor einer Trocknung mit einem Hydrophilierungsmittel, wie beispielsweise Glycerin, behandelt werden.
   Hydrophile Membranen zeichnen sich dadurch aus, dass sie mit Wasser benetzbar sind. Ein Maß für die Benetzbarkeit ist der Randwinkel, den ein Wassertropfen zur Membranoberfläche bildet. Bei hydrophilen Materialien ist dieser Randwinkel stets größer als 90 Grad. Phänomenologisch lässt sich die Benetzung einer Dialysemembran auch daran erkennen, dass ein auf die Membranoberfläche gebrachter Wassertropfen nach kurzer Zeit in die Membran eindringt.
   Ein weiterer schwerwiegender Nachteil hydrophober Materialien für den Einsatz in Membranen besteht darin, dass sie oft ein starkes, unspezifisches Adsorptionsvermögen besitzen. Beim Einsatz hydrophober Membranen findet deshalb häufig eine schnelle, fest anhaftende Belegung der Membranoberfläche mit vorzugsweise höhermolekularen Lösungsbestandteilen statt. Dieses als Fouling bekannte Phänomen führt zu einer raschen Verschlechterung der Membranpermeabilität. Durch eine nachträgliche Behandlung der Membran mit einem Hydrophilierungsmittel kann das Fouling nicht nachhaltig verhindert werden.
   Es sind bereits Vorschläge für den Einsatz von hydrophilen Polymer(systemen) als Membranmaterial bekannt geworden, die die genannten Nachteile nicht besitzen sollen. So wird in der DE-OS 3 149 976 vorgeschlagen, zur Herstellung einer hydrophilen Membran ein Polymerisatgemisch zu verwenden, das neben Polysulfon oder Polyamid wenigstens 15 Gewichtsprozent Polyvinylpyrrolidon enthält. Zur Hydrophilierung von z.B. Polyimid- und Polyethersulfonmembranen wird in der EP-A-0 228 072 die Verwendung von Polyethylenglycol in Mengen von 44 bis 70 Gewichtsprozent, bezogen auf die Polymerlösung, beansprucht.
   Die Hydrophilierung von Membranen durch Einsatz großer Mengen wasserlöslicher Polymere hat aber den Nachteil, dass die Hydrophilie der Membran bei deren Einsatz in wässrigen Medien stetig abnimmt, da das wasserlösliche Polymer herausgewaschen wird. Dies kann dazu führen, dass das Membranmaterial seine ursprüngliche Hydrophobie wiedergewinnt und die damit verbundenen, zuvor genannten, negativen Begleiterscheinungen zeigt.
   Vermeiden lassen sich die Nachteile durch die Verwendung von hydrophilen, jedoch wasserunlöslichen Polymeren für die Membranherstellung. So wird in einer Reihe von Patenten, z.B. EP-A-0 182 506 und US-PS 3,855,122, die Herstellung von Membranen aus sulfonierten Polymeren beansprucht. Die dort beschriebenen Verfahren sind jedoch nur für die Herstellung von Flachmembranen geeignet. Die Membranen besitzen ein hohes Salzrückhaltevermögen und kommen vornehmlich für den Einsatz bei der Umkehrosmose infrage.
   Membranen sollten insbesondere beim Einsatz für die Dialyse, möglichst geringe Werte für die Bradykinin-Generierung aufweisen. Die Bradykinin-Generierung ist mit unangenehmen Begleiterscheinungen, die für den Dialysepatienten eine Gefahr darstellen können, verbunden (G. Bönner et al., J. of Cardiovasc. Phar. 15 (Suppl. 6), S. 46-56 (1990). Auch wenn die klinische Bedeutung der Bradykinin-Generierung noch nicht vollständig erforscht ist, sollte versucht werden, diese Generierung, wie sie etwa durch einen hohen Anteil an Sulfonatverbindungen in der Membran über die sogenannte "Kontaktaktivierung" ausgelöst wird, nach Möglichkeit zu vermeiden.
   So wird in der WO 94/05406 eine synthetische Membran beschrieben, die aus einem Gemisch aus Poly(ether)sulfon und sulfonierten Pol(ether)sulfon und nicht mehr als 20 Gew.-% an weiteren Polymeren besteht, wobei das Gemisch nur etwa 0,5 bis 8 Gew.-% sulfoniertes Poly(ether)sulfon, ggf. als Salz der Sulfonsäure enthält.
   Die in WO 94/05406 eingesetzten Poly(ether)sulfone enthalten dennoch einen, wenn auch geringen, Anteil an Sulfonatverbindungen.
   Der Erfindung liegt die Aufgabe zugrunde, hydrophile aromatische Polyethersulfone sowie ein Verfahren zur ihrer Herstellung zur Verfügung zu stellen, wobei die Nachteile des Standes der Technik beim Einsatz dieser Polyethersulfone, wie z.B. in Membranen, zumindestens verringert werden.
   Diese Aufgabe wird gelöst durch eine Verfahren zur Herstellung von hydrophilen aromatischen Polyethersulfonen, bei dem zunächst ein aromatisches Polyethersulfon durch Polykondensation von zweiwertigen, hydroxylierten und/oder halogenierten aromatischen Verbindungen als Reaktionspartner, von denen mindestens ein Reaktionspartner eine Sulfongruppe enthält und mindestens ein Reaktionspartner mit einer oder mehreren Alkoxygruppen am aromatischen Ring oder an den aromatischen Ringen substituiert ist, hergestellt wird, welches Verfahren sich dadurch auszeichnet, dass zumindestens ein Teil der Alkoxygruppen des entstandenen aromatischen Polyethersulfons anschließend durch polymeranaloge Umsetzung zu Hydroxylgruppen gespalten wird.
   Unter dem Begriff "zweiwertig" ist zu verstehen, dass die Reaktionspartner jeweils zwei Funktionalitäten für eine Kondensationsreaktion zur Verfügung stellen. Diese Funktionalitäten sind entweder Halogen- oder Hydroxylgruppen, die jeweils an den aromatischen Ringen bzw. dem aromatischen Ring der Reaktionspartner als Substituenten vorhanden sind. Die Reaktionspartner können sowohl nur die funktionellen Gruppen eines Typs, also nur Hydroxyl- oder nur Halogengruppen, als Substituenten enthalten, es können selbstverständlich auch beide Typen an funktionellen Gruppen an demselben Reaktionspartner vorhanden sein. Im ersten Fall würden dann z.B. aromatische Dihalogenverbindungen mit Diphenolen reagieren, wobei zur Bildung der aromatischen Polyethersulfone also mindestens zwei unterschiedliche Reaktionspartner erforderlich sind, während es sich im zweiten Fall beispielsweise um halogenierte Phenole handeln kann und die Reaktionspartner auch gleich sein können. Selbstverständlich können auch Mischungen aus verschiedenen Typen, also z.B. Dihalogenverbindungen mit Dihydroxylverbindungen und halogenierten Phenolen als Reaktionspartner eingesetzt werden.
   Der Begriff "Reaktionspartner" umfasst Monomere, aber ist nicht darauf beschränkt. Selbstverständlich können auch Oligomere oder Polymere mit den entsprechenden Funktionalitäten, d.h. Endgruppen, eingesetzt werden.
   Die Zahl der miteinander reagierenden Reaktionspartner ist prinzipiell keinen Beschränkungen unterzogen.
   Bevorzugt wird jedoch bei der Polykondensation der Einsatz jeweils eines Typs von Dihalogenverbindungen und Diphenolen, wie weiter unten näher erläutert wird.
   Der Begriff "Polyethersulfon" (PES) bezieht sich auf in der Regel überwiegend aromatische Polymere, die in ihrer Hauptkette periodisch wiederkehrende Ether-und Sulfongruppen enthalten. Dabei können selbstverständlich auch z.B. zwei oder mehrere Ethergruppen in der Hauptkette aufeinander_folgen, bevor die nächste Sulfongruppe folgt, wie beispielsweise in einem Polyetherethersulfon (PEES). Ebenso ist es natürlich möglich, dass zunächst zwei oder mehrere Sulfongruppen in der Hauptkette aufeinander folgen, bevor die nächste Ethergruppe folgt.
   Die Polykondensation im erfindungsgemäßen Verfahren wird bevorzugt in einem Lösungsmittelsystem bestehend aus einer dipolar aprotischen und einer unpolaren aromatischen Verbindung durchgeführt.
   Die dipolar aprotischen Verbindungen umfassen Dimethylsulfoxid, Dimethylacetamid, Sulfolan (Tetrahydrothiophen-1,1-dioxid, Tetramethylensulfon), Dimethylformamid und N-Methylpyrrolidon, sind aber nicht darauf beschränkt.
   Beispiele für unpolare aromatische Verbindungen für das Lösungsmittelsystem sind Toluol, Chlorbenzol oder Xylol.
   Vorteilhaft ist es, wenn die aromatische Verbindung mit Wasser und der dipolar aprotischen Verbindung ein Azeotrop bildet, wie z.B. in dem Lösungsmittelsystem aus Dimethylacetamid und Toluol. Dadurch kann die Reaktionstemperatur leicht über die Konzentration der aromatischen Verbindung gesteuert werden und außerdem kann das bei der Polykondensation freiwerdende Reaktionswasser abdestilliert werden.
   Besonders bevorzugt ist es, wenn das Lösungsmittelsystem ein Dimethylacetamid/Toluol und/oder ein Sulfolan/Chlorbenzol Gemisch ist.
   Weitere vorteilhafte Kombinationen werden durch die Systeme Chlorbenzol mit Dimethylsulfoxid, Diemthylformamid oder auch Dimethylacetamid gebildet.
   Bei der Umsetzung von phenolischen Gruppen mit halogenierten aromatischen Verbindungen hat es sich allgemein bewährt, wenn die Nucleophilie der phenolischen Gruppe dadurch erhöht wird, dass durch Zusatz einer Base das korrespondierende Phenolatanion gebildet wird.
   Es wird daher im erfindungsgemäßen Verfahren bevorzugt, wenn die Polykondensation in Gegenwart von Carbonaten durchgeführt wird, wobei Metallcarbonate der ersten Gruppe des Periodensystems, insbesondere Na₂CO₃ und/oder K₂CO₃ besonders bevorzugt werden.
   Da mindestens einer der Reaktionspartner, die zur Bildung der aromatischen Polyethersulfone eingesetzt werden, eine oder mehrere Alkoxygruppen enthält, kann es im Verlauf der Polykondensation zur einer Arylalkyletherspaltung als Nebenreaktionen kommen. Dabei wird durch den nucleophilen Angriff des Phenolates auf diese Arylalkyletherbindung die Alkoxygruppe als Alkoxylat abgespalten, wodurch Kettenverzweigungen auftreten können. Daneben kann auch die im Verlauf der Polykondensation sich bildende Arylaryletherbindung durch das Phenolat angegriffen werden, was zu einer Kettenspaltung führt.
   Für die Reaktionsführung hat es sich deshalb als besonders vorteilhaft erwiesen, wenn beispielsweise die Polykondensation der Reaktionspartner zu aromatischen Polyethersulfonen in einem Dimethylacetamid/Toluol-Gemisch bei 155 bis 160 °C und mit K₂CO₃ als Base durchgeführt wird. Als besonders günstig hat sich dabei eine Temperatur von 160 °C erwiesen.
   Diese Reaktionsbedingungen bieten zwei für die Polykondensation günstige Besonderheiten. Dimethylacetamid (Siedepunkt 166 °C) und Toluol (Siedepunkt 111 °C) bilden ein Azeotrop. Bei einer Siedetemperatur von 160 °C liegen noch ca. 10 % Toluol im Lösungsmittelgemisch vor. Durch den Toluolanteil in der Lösung sinkt die Löslichkeit von Salzen und damit die des Phenolats stark ab. Die Basenkonzentration in der Lösung ist demzufolge zu jedem Zeitpunkt sehr gering. Insbesondere bei der Reaktion von Diphenolen mit aromatischen Dihalogenverbindungen liegt dadurch stets ein hoher Überschuss an Diahalogenverbindung vor, der sofort mit dem sich lösenden Phenolat reagiert. Durch das rasche Abreagieren der Phenolatanionen mit den Dihalogenverbindungen werden die oben beschriebenen Nebenreaktionen beträchtlich reduziert.
   Wie bereits weiter oben ausgeführt, ist die Auswahl der zweiwertigen, hydroxylierten und/oder halogenierten aromatischen Verbindungen prinzipiell keinen besonderen Beschränkungen unterlegen.
   Im erfindungsgemäßen Verfahren werden als zweiwertige, hydroxylierte aromatische Verbindungen bevorzugt Verbindungen der folgenden allgemeinen Formel eingesetzt: 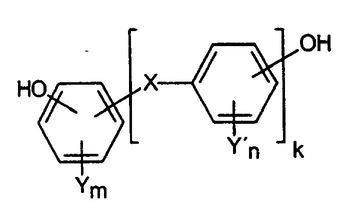
worin:
X eine direkte Bindung, -O-, -S-, - SO₂-, -CO-, CH₂-, -C(CH₃)₂-, -C(CF₃)₂- ist,
Y und Y' unabhängig voneinander Alkoxygruppen mit jeweils 1 bis 8, bevorzugt 1-4 C-Atome, besonders bevorzugt Methoxygruppen, sind,
m und n unabhängig voneinander = 0, 1, 2, 3 oder 4 sind,
und k = 0, 1 oder 2 ist.

Besonders bevorzugt für den Einsatz als zweiwertige, hydroxylierte aromatische Verbindung wird das gegebenenfalls Alkoxygruppen enthaltene Bis[4-hydroxyphenyl]sulfon und/oder Hydrochinon eingesetzt, wie z.B. Methoxyhydrochinon.

Im erfindungsgemäßen Verfahren werden als zweiwertige, halogenierte aromatische Verbindungen bevorzugt Verbindungen der folgenden allgemeinen Formel eingesetzt: 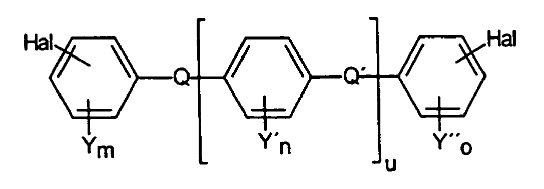 worin:
Hal gleiche oder verschiedene Halogenatome, bevorzugt Fluor oder Chlor, in p- oder o-Stellung sind,
Y, Y' und Y'' unabhängig voneinander Alkoxygruppen mit jeweils 1 bis 8, bevorzugt 1-4 C-Atomen , besonders bevorzugt Methoxygruppen, sind,
m, n und o unabhängig voneinander = 0, 1, 2, 3 oder 4 sind,
Q und Q' = -CO- und/oder -SO₂-Gruppen sind,
u = 0, 1 oder 2 ist.

Besonders bevorzugt für den Einsatz als zweiwertige, halogenierte aromatische Verbindung werden das gegebenenfalls Alkoxygruppen enthaltene Bis[4-halogenphenyl]sulfon.

Für das erfindungsgemäße Verfahren hat es sich als besonders vorteilhaft erwiesen, wenn das aromatische Polyethersulfon durch Polykondensation von Bis[4-hydroxyphenyl]sulfon mit methoxyliertem Bis[4-chlorphenyl]sulfon und/oder methoxyliertem Bis[4-fluorphenyl]sulfon hergestellt wird.
Als Beispiel sei die Polykondensation von Bis[4-hydroxyphenyl]sulfon mit 4,4'-Dichlor-2'-methoxydiphenylsulfon und/oder 4,4'-Difluor-2'-methoxydiphenylsulfon zum entsprechenden methoxylierten Polyethersulfon genannt.

Ein weiteres bevorzugtes Polymer wird erhalten, wenn das aromatische Polyethersulfon durch Polykondensation von Methoxyhydrochinon mit Bis[4-chlorphenyl]sulfon und/oder Bis[4-fluorphenyl]sulfon hergestellt wird.
Dabei entsteht ein methoxyliertes Polyetherethersulfon (PEES).

Es ist selbstverständlich auch möglich, für das erfindungsgemäße Verfahren Blockcopolymere einzusetzen, in dem alkoxylierte Polyethersulfonblöcke und nicht-alkoxylierte Polyethersulfonblöcke vorliegen. Dies hat den Vorteil, dass der sich im Verfahren anschließende Spaltungsschritt zumindestens eines Teils der Alkoxygruppen zu Hydroxylgruppen auf vorher bestimmte Bereiche des entstandenen Polyethersulfons begrenzen lassen kann. Dadurch lassen sich die Eigenschaften der Polymeren noch besser maßschneidern. Blockcopolymere haben im Gegensatz zu Polymerblends den Vorteil, dass nicht eine (hydrophile) Komponente z.B. durch Kontakt mit dem Blut ausgewaschen werden kann, eine Eigenschaft, die besonders beim Einsatz in medizinische Dialysemembranen wichtig ist.
Blockcopolymere lassen sich durch Polykondensation geeigneter Telechele herstellen. Der Begriff "Telechele" ist dem Fachmann bekannt. Es handelt sich dabei in der Regel um Oligomere oder niedermolekulare Polymere, die an beiden Kettenenden monofunktionelle Endgruppen tragen. Telechele können daher ebenfalls als Reaktionspartner bei der Herstellung von Polyethersulfonen eingesetzt werden.

Für das erfindungsgemäße Verfahren wird es bevorzugt, wenn das aromatische Polyethersulfon durch Polykondensation von hydroxytelechelem Polyethersulfon mit fluortelechelem, methoxylierten Polyetherethersulfon hergestellt wird.
Herstellbar ist das fluortelechele, methoxylierte Polyetherethersulfon beispielsweise durch Polykondensation von Methoxyhydrochinon und Bis[4-fluorphenyl]sulfon, wenn das Dihalogen im Überschuss eingesetzt wird. Die Herstellung von hydroxytelechelen Polyethersulfonen ist z.B. aus der Diplomarbeit von H. Weisse (Rheinisch-Westfälische Technische Hochschule Aachen 1995) bekannt.

Um zu den hydrophilen aromatischen Polyethersulfonen zu gelangen, muss zumindestens ein Teil der in den aromatischen Polyethersulfonen vorhandenen Alkoxygruppen in einer polymeranalogen Umsetzung zu Hydroxylgruppen gespalten werden. Es entstehen dabei die (partiell) hydroxylierten Polyethersulfone.

Es ist vorteilhaft, wenn diese polymeranaloge Umsetzung mit Cyaniden durchgeführt wird, wobei es sich besonders bewährt hat, wenn es sich bei den Cyaniden um Metallcyanide der ersten Gruppe des Periodensystems, wie NaCN oder KCN, handelt.

In aller Regel wird die polymeranaloge Umsetzung zu den hydrophilen Polyether(ether)sulfonen in einem dipolar aprotischen Lösungsmittel durchgeführt. Dabei hat sich z.B. die Verwendung von Dimethylsulfoxid unter wasserfreien Bedingungen besonders bewährt. Diese Reaktion wird vorteilhaft bei Temperaturen zwischen 80 °C und dem Siedepunkt von Dimethylsulfoxid, besonders bevorzugt zwischen 100 und 140°C, durchgeführt.

Durch die polymeranaloge Umsetzung des erfindungsgemäßen Verfahrens werden Hydroxylgruppen in die aromatischen Polyethersulfone eingeführt, die deren Hydrophilie erhöhen. Die durch die Alkoxyspaltung, auch Alkylaryletherspaltung genannt, entstehenden Hydroxylgruppen lassen sich durch die Einführung des Hydroxylierungsgrades quantifizieren.
Dieser Hydroxylierungsgrad ist definiert als das prozentuale Verhältnis aus der Anzahl der Hydroxylgruppen zu der Anzahl der Wiederholungseinheiten im hydrophilen Polyethersulfon. Im Falle einer Hydroxylgruppe pro Wiederholungseinheit liegt also ein Hydroxylierungsgrad von 100 % vor.

Der Hydroxylierungsgrad der im beanspruchten Verfahren erreichbar ist, lässt sich in weiten Grenzen einstellen. Dies ist im wesentlichen abhängig von der Anzahl der Alkoxygruppen im aromatischen Polyethersulfon, von der Konzentration an Cyanidionen in der Lösung, der Reaktionstemperatur sowie von der Reaktionszeit.
Bei der polymeranalogen Alkylaryletherspaltung ist als Nebenreaktion ein partieller Abbau der Kette durch Arylaryletherspaltung nicht ganz zu unterdrücken, was zu einem Molekulargewichtsabbau führt. Für die Herstellung z.B. von Folien ist ein ausreichendes Molekulargewicht und damit eine ausreichende mechanische Festigkeit jedoch entscheidend. Reicht die mechanische Festigkeit nicht mehr aus, kann das Material nur als Blend bis zu bestimmten Anteilen mit einem höhermolekularen Polyethersulfon verarbeitet werden.

Im erfindungsgemäßen Verfahren ist es daher bevorzugt, dass die polymerananloge Umsetzung bis zu einem Hydroxylierungsgrad, als das prozentuale Verhältnis aus der Anzahl der Hydroxylgruppen zu der Anzahl der Wiederholungseinheiten im hydrophilen Polyethersulfon, von 0,1 bis 90 %, noch bevorzugter von 2 bis 40 %, durchgeführt wird.

Die Bestimmung des Hydroxylierungsgrades, also des Grades der Alkoxyetherspaltung bzw. der Hydroxylierung lässt sich beispielsweise durch die ¹H-NMR-Spektroskopie vornehmen. Auch im ¹³C-NMR Spektrum gibt es charakteristische Änderungen, die durch das Entstehen von Hydroxylgruppen bzw. das Verschwinden von Alkoxygruppen an aromatischen Systemen hervorgerufen werden. Weiterhin lässt sich der Hydroxylierungsgrad auch mit Hilfe der FTIR-Spektroskopie zumindestens qualitativ oder semi-quantitativ bestimmen.
Die Bestimmung von Reaktionsfortschritten durch NMR- und/oder IR-spektroskopische Methoden ist dem Fachmann geläufig und bedarf hier keiner weiteren Erläuterung. Exemplarisch sei auf das Lehrbuch von Hesse, Meier, Zeeh, Spektroskopische Methoden in der organischen Chemie, Georg Thieme Verlag Stuttgart, New York (1984) und dort zitierte Literatur verwiesen.

Mittels der vorliegenden Erfindung werden hydrophile Polyethersulfone zur Verfügung gestellt, die ebenfalls beansprucht werden.
Diese hydrophilen aromatischen Polyethersulfone zeichnen sich dadurch aus, dass sie Hydroxylgruppen als Substituenten an zumindestens einem Teil der aromatischen Gruppen in den Wiederholungseinheiten enthalten.

Bei diesen hydrophilen aromatischen Polyethersulfonen ist es bevorzugt, dass der Hydroxylierungsgrad, als das prozentuale Verhältnis aus der Anzahl der Hydroxylgruppen zu der Anzahl der Wiederholungseinheiten im hydrophilen Polyethersulfon, zwischen 0,1 und 90 %, noch bevorzugter zwischen 2 und 40 %, liegt.

In einer weiteren bevorzugten Ausführungsform enthalten die hydrophilen aromatischen Polyethersulfone Alkoxygruppen als Substituenten an zumindestens einem Teil der aromatischen Gruppen in den Wiederholungseinheiten.

Besonders bevorzugt sind diese Alkoxygruppen Methoxygruppen.

Wie bereits eingangs erwähnt, umfassen die Polyethersulfone auch die Polyetherethersulfone.
In einer weiteren besonders bevorzugten Ausführungsform enthalten die beanspruchten hydrophilen aromatischen Polyethersulfone daher als Strukturelement eine Gruppe der Formel:

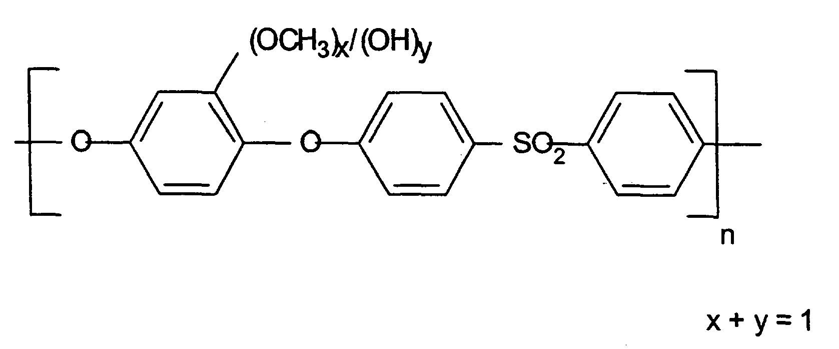

Hierbei bedeutet x+y =1, dass pro Wiederholungseinheit entweder eine Methoxy- oder eine Hydroxygruppe vorliegt und die Summe dieser Substituenten über alle Wiederholungseinheiten gleich 100 % beträgt. Bei einem hydrophilen aromatischen Polyetherethersulfon mit einem Hydoxylierungsgrad von 50 % wäre also X=y=0,5.

Die vorliegende Erfindung ist weiterhin auf hydrophile aromatische Polyethersulfone gerichtet, die nach dem erfindungsgemäßen Verfahren herstellbar sind.

Weiterhin ist die Erfindung auf synthetische Membranen gerichtet, enthaltend ein beanspruchtes hydrophiles aromatisches Polyethersulfon und/oder ein hydrophiles aromatisches Polyethersulfon, das nach dem erfindungsgemäßen Verfahren herstellbar ist.

Die folgenden Beispiele dienen der Erläuterung der vorliegenden Erfindung und sind nicht so auszulegen, dass sie die Erfindung in irgendeiner Weise einschränken.

### Allgemeine Arbeitstechniken

- Schutzgas:: Alle Apparaturen wurden vor Beginn der Reaktionen zweimal im Membranpumpenvakuum evakuiert und anschließend mit Stickstoff (Qualität 5.0, Fa. Linde und Fa. Westfalen) belüftet. Chemikalien wurden, soweit sie nicht unter Stickstoff gelagert wurden, analog behandelt. Lösungsmittel wurden unabhängig von der Vorbehandlung jeweils zweimal im Membranpumpenvakuum 10 min entgast und wieder mit Stickstoff belüftet.
- Lösungsmittel:: DMAc wurde nach Trocknen mit Calciumhydrid vakuumdestilliert und unter Stickstoff gelagert.
DMSO wurde mit Calciumhydrid getrocknete und frisch umkondensiert.
Toluol p.a. (Fa. Aldrich) und Ethanol techn. wurden direkt verwendet.
- Katalysatoren:: Wasserfreies Aluminiumchlorid 99 %ig (Fa. Aldrich) und
Eisen(III)chlorid (wasserfrei, > 98 %) (Fa. Merck).
- Monomere:: Bis[4-hydroxyphenyl]sulfon und Bis[4-chlorphenyl]sulfon (beide Fa. Merck) wurden ohne weitere Reinigung eingesetzt
Bis[4-fluorphenyl]sulfon (Synthese s. unten) wurde vakuumdestilliert.
Bis[4-fluorphenyl]sulfon der Fa. Aldrich wurde unverändert eingesetzt.
Methoxyhdrochinon der Fa. ABCR wurde bei 110 °C (1x10⁻² mbar) destilliert und unter Stickstoff gelagert.
Methoxyhydrochinon der Fa. Aldrich (> 99 %) wurde nach dem Trocknen unverändert eingesetzt.
- Sonstige Reagenzien:: Kaliumcarbonat p.a. (Fa. Fluka) wurde trocken gelagert und direkt eingesetzt.
Natriumcyanid wurde 15 h im Ölpumpenvakuum bei 150 °C getrocknet und ohne weitere Reinigung verwendet.

### Synthese von Monomeren

Zur Darstellung von Bis[halogenphenyl]sulfonen wurde ein Halogenbenzolsulfonsäurechlorid in stöchiometrischen Mengen in einem Halogenbenzol gelöst. Die Lösung wurde auf die gewünschte Reaktionstemperatur gebracht. Zu der Lösung wurde (a) nach einer allgemeinen Vorschrift von Huiseman (D.R. 701954 (1938), IG Farbenindustrie AG) trockenes Eisen(III)chlorid in katalytischen Mengen oder (b) trockenes Aluminiumchlorid in stöchiometrischen Mengen gegeben, und die Temperatur wurde bis zur Beendigung der Salzsäureentwicklung gehalten. Danach wurde noch 2 h bis zu der jeweils angegebenen Temperatur erhitzt (100-120°C) und das Produkt wurde anschließend gefällt. Das Rohprodukt wurde gereinigt.

### a) Synthese von 4,4'-Dichlor-2-methoxydiphenylsulfon

| | | |
|---|---|---|
| Ansatz: | 6,9 g | 0,033 mol Chlorbenzolsulfonsäurechlorid |
| | 5,0 g | 0,035 mol 3-Chloranisol |
| | 0,1 g | FeCl₃ (trocken) |

Die Reaktion wurde bei 100 °C durchgeführt. Nach Beendigung der Salzsäureentwicklung wurde die Temperatur auf 120 °C erhöht. Nach dem Fällen in siedendem Wasser und Zersetzen von restlichem Säurechlorid wurde das Rohprodukt durch zweimaliges Umfällen aus Ethanol gereinigt. Ausbeute: 6,1 g (65 % der Theorie).
Es wurde ein Isomerengemisch erhalten, das neben dem Produkt noch 4,2'-Dichlor-4'-methoxydiphenylsulfon enthielt. Dieses Isomerengemisch wurde mittels Säulenchromatographie (50 cm Kieselgelsäule, Durchmesser 5 cm, Lösungsmittelgemisch: Ethylacetat/Essohexan 1:2, Beladung 3 g) getrennt.

### b) Synthese von 4,4'-Difluor-2-methoxydiphenylsulfon

| | | |
|---|---|---|
| Ansatz: | 12,0 g | 0,062 mol Fluorbenzolsulfonsäurechlorid |
| | 7,8 g | 0,062 mol 3-Fluoranisol |
| | 0,1 g | - FeCl₃ (trocken) |

Der Ansatz wurde von Raumtemperatur langsam auf 80 °C erhöht. Nach Beendigung der Salzsäureentwicklung wurde die Temperatur auf 100 °C erhöht. Nach dem Eingießen in ein Wasser/Ethanolgemisch (4/1) und Zersetzen von restlichem Säurechlorid in der Siedehitze fällt das Rohprodukt beim Abkühlen der Lösung aus. Das Rohprodukt wurde mittels Säulenchromatographie (20 cm Kieselgelsäule, Lösungsmittelgemisch: EthylacetatlEssohexan 1:2) gereinigt.
Ausbeute: 7,0 g (40 % der Theorie).

### c) Synthese von Bis[4-fluorphenyl]sulfon

| | | |
|---|---|---|
| Ansatz: | 85 g | 0,44 mol Fluorbenzolsulfonsäurechlorid |
| | 42 g | 0,44 mol Fluorbenzol |
| | 85 g | 0,64 mol AlCl₃ (trocken) |

Die Reaktion wurde bei 0°C durchgeführt. Nach-Beendigung der Salzsäureentwicklung wurde die Temperatur langsam auf 100 °C erhöht. Nach dem Fällen auf Eis wurde das Produkt neutral gewaschen und getrocknet. Das Rohprodukt wurde durch Vakuumdestillation (1X10⁻¹ mbar) bei 145 °C gereinigt.
Ausbeute: 99,5 g (86 % der Theorie).

### Beispiele 1 bis 7: Herstellung der aromatischen Polyethersulfone

### Beispiel 1: Allgemeine Arbeitsvorschrift I (AAV I) zur Darstellung der aromatischen Polyethersulfone aus Bisphenolen und aromatischen Dihalogenverbindungen

N mol einer oder mehrerer Bishydroxykomponenten wurden unter Stickstoff in Sulfolan gelöst, so dass eine 40 %ige Lösung entstand. Bei kleinen Ansätzen (< 5 g Hydroxykomponenten) wurde mit einer 20-30 %igen Lösung gearbeitet. Danach wurde soviel 50 %ige Kaliumcarbonatlösung zugegeben, dass ein 1,05 molarer Überschuss Kaliumcarbonat bezüglich der Bishydroxykomponenten vorlag. Die Lösung wurde auf 80 °C erhitzt. Dabei entstand das Bisphenolat und es lag eine Suspension des Phenolates in Sulfolan vor. Nun wurde soviel Chlorbenzol zugegeben, dass das Reaktionswasser und das durch die Kaliumcarbonatlösung zugegebene Wasser azeotrop destilliert werden konnte (z.B. 50 ml Chlorbenzol für 10 g 50 %ige K₂CO₃-Lösung). Danach wurde langsam auf 160 °C erhitzt. Das Chlorbenzol/Wasser Azeotrop wurde bei 81 °C und das überschüssige Chlorbenzol bei 132 °C destilliert. Restliches Chlorbenzol wurde im Membranpumpenvakuum bei 80 °C Ölbadtemperatur entfernt. Anschließend wurden soviel Mol einer oder mehrerer Dihalogenverbindungen zugegeben, dass das gewünschte molare Verhältnis der Halogen- zu den Phenolatkomponenten vorlag. Die Suspension wurde auf 210 °C erhitzt. Nach 4 bis 16 h Reaktionszeit wurde das Produkt in einem zehnfachen Überschuss eines Wasser/Ethanol-Gemisches (1:1) gefällt und filtriert. Anschließend wurde das Produkt zweimal in einem analogen Gemisch 1 h heiß extrahiert. Danach wurde eine Stunde in einem zehnfachen Überschuss Ethanol heiß extrahiert. Das Produkt wurde im Ölpumpenvakuum bis zur Druckkonstanz getrocknet.

### Beispiel 2: Allgemeine Arbeitsvorschrift II (AAV II) zur Darstellung der aromatischen Polyethersulfone aus Bisphenolen und aromatischen Dihalogenverbindungen

Es wurden N mol einer oder mehrerer Bihydroxyverbindungen und soviel Mole einer oder mehrerer Dihalogenverbindungen mit Kaliumcarbonat zusammengegeben, dass das gewünschte molare Verhältnis der Halogen- zu den Bishydroxykomponenten vorlag. Die Menge Kaliumcarbonat wurde so berechnet, dass ein 1,05-facher Überschuss gegenüber den Bisphenolen vorlag. Nun wurde der Kolben zweimal evakuiert und mit Stickstoff belüftet. Unter Stickstoff wurde soviel frisch entgastes DMAc zugegeben, dass eine 25 %ige Lösung entstand. Bei kleinen Ansätzen (< 5 g Hydroxyverbindung) wurde mit einer 10-15 %igen Lösung gearbeitet. Außerdem wurde die gleiche Menge entgastes Toluol als azeotropes Schleppmittel für das Reaktionswasser zugegeben. Die Lösung wurde langsam erhitzt. Dabei entstand das Bisphenolat; und es lag eine Suspension des Phenolates vor. Bei 84,1 °C wurde das Reaktionswasser azeotrop über eine Kurzwegdestille destilliert. Die Siedetemperatur des Azeotrops stieg kontinuierlich, und schließlich wurde ein Toluol/DMAc-Azeotrop destilliert. Dieses wurde fortgeführt, bis die Siedetemperatur 160 °C erreicht hatte und der Anteil des Toluols in der Lösung auf 10 % gesunken war. Ab dieser Siedetemperatur siedete die Lösung unter Rückfluss und es wurde kein Lösungsmittel mehr über die Kurzwegdestille entfernt. Durch die azeotrope Destillation von DMAc hatte die Suspension eine Konzentration von 30-35 % erreicht. Zu diesem Zeitpunkt war bereits der weit überwiegende Teil der Bishydroxyverbindung in sein Bisphenolat überführt worden. Restliches Bisphenol wurde während der Reaktion in sein Bisphenolat überführt und das Reaktionswasser wurde als Toluol/Wasser-Azeotrop abdestilliert. Die Menge an nachträglich gebildetem Reaktionswasser war so gering, dass die Konzentration des Toluols in der Lösung nicht wesentlich beeinflusst wurde (ein Wasserabscheider konnte nicht benutzt werden, da das DMAc/Toluol/Wasser-Gemisch eine homogene Lösung bildet).
Nach beendeter Reaktion (4 bis 16 h) wurde das Produkt mit der gleichen Menge an DMSO verdünnt und in einem zehnfachen Überschuss eines Wasser/Ethanol-Gemisches (1:1) gefällt und filtriert. Anschließend wurde das Produkt zweimal in einem analogen Gemisch 1 h heiß extrahiert und danach 1 h in einem zehnfachen Überschuss Ethanol heiß extrahiert. Das Produkt wurde im Ölpumpenvakuum bis zur Druckkonstanz getrocknet.

### Beispiel 3: Polykondensation von methoxylierten Bis[halogenphenyl]sulfonen mit Bis[4-hydroxyphenyl]sulfon

| | | |
|---|---|---|
| 1) Ansatz | q = 0,96 | |
| | 0,25 g | 0,99 mmol Bis[4-hydroxyphenyl]sulfon |
| | 0,3 g | 0,95 mmol 4,4'-Dichlor-2-methoxydiphenylsulfon |
| | 0,144 g | 1,04 mmol Kaliumcarbonat |
| | 1 ml | Sulfolan |
| | 3 ml | Chlorbenzol |

Die Durchführung erfolgte nach der AAV I. Die Reaktionszeit betrug 15 h. Ausbeute: 0,27 g (56 % der Theorie). Zahlenmittel des Molekulargewichts war (nach GPC) 2900.

| | | |
|---|---|---|
| 2) Ansatz | q = 0,90 | |
| | 0,7924 g | 3,166 mmol Bis[4-hydroxyphenyl]sulfon |
| | 1,00 g | 3,518 mmol 4,4'-Difluor-2-methoxydiphenylsulfon |
| | 0,46 g | 3,33 mmol Kaliumcarbonat |
| | 10 ml | DMAc |
| | 5 mol | Toluol |

Die Durchführung erfolgte nach der AAV II. Die Reaktionszeit betrug 6 h. Ausbeute: 0,6 g (34 % der Theorie). Zahlenmittel des Molekulargewichts war (nach GPC) 4400.

### Beispiel 4: Polykondensation von Methoxyhydrochinon mit Bishalogenphenylsulfonen

| | | |
|---|---|---|
| Ansatz: | q = 0,99 | |
| | 4,9786 g | 19,6 mmol Bis[4-fluorphenyl]sulfon |
| | 2,7167 g | 19,4 mmol Methoxyhydrochinon |
| | 2,81 g | 20 mmol Kaliumcarbonat |
| | 20 ml | DMAc |
| | 20 ml | Toluol |

Die Durchführung erfolgte nach der AAV II. Die Reaktionszeit betrug 4,5 h. Ausbeute: 6,85 g (99 % der Theorie). Zahlenmittel des Molekulargewichts war (nach GPC-Lichtstreuung) 24000.

### Beispiel 5: Synthese von Fluortelechelen aus Methoxyhydrochinon und Bis[4-fluorphenyl]sulfon

| | | |
|---|---|---|
| Ansatz: | q = 0,8 | |
| | 2,23 g | 15,9 mmol Methoxyhydrochinon |
| | 5,05 g | 19,9 mmol Bis[4-fluorphenyl]sulfon |
| | 2,28 g | 16,5 mmol Kaliumcarbonat |
| | 20 ml | DMAc |
| | 20 ml | Toluol |

Die Durchführung erfolgte nach der AAV II. Die Reaktionszeit betrug 6 h. Ausbeute: 5,4 g (84 % der Theorie). Zahlenmittel des Molekulargewichts war (nach GPC) 4300.

### Beispiel 6: Synthese von Polyethersulfon-Hydroxytelechelen

| | | |
|---|---|---|
| Ansatz: | q = 0,9 | |
| | 2,979 g | 21,19 mmol Methoxyhydrochinon |
| | 4,850 g | 19,07 mmol Bis[4-fluorphenyl]sulfon |
| | 3,07 g | 22,2 mmol Kaliumcarbonat |
| | 30 ml | DMAc |
| | 30 ml | Toluol |

Die Durchführung erfolgte nach der AAV II. Die Reaktionszeit betrug 16 h. Ausbeute: 2,2 g (32 % der Theorie). Zahlenmittel des Molekulargewichts war (nach NMR-Endgruppenanalyse) 2600.

### Beispiel 7: Synthese von Multiblockcopolymeren mit Poly[oxy-1,4-methoxyphenylen-oxy-1,4-phenylen-sulfonyl-1,4-phenylen]-und Poly[oxy-1,4-phenylen-sulfonyl-1,4-phenylen]-Blöcken

| | | |
|---|---|---|
| Ansatz: | q = 0,96 | |
| | 2,7 g | 2,05 mmol Polyethersulfon-Hydroxytelechel |
| | 4 g | 1,07 mmol methoxyliertes Polyetherethersulfon- |
| | | Fluortelechel |
| | 0,3 g | 2,17 mmol Kaliumcarbonat |
| | 20 ml | DMAc |
| | 15 ml | Toluol |

Die Durchführung erfolgte nach der AAV II. Die Reaktionszeit betrug 6 h. Ausbeute: 6,4 g (97 % der Theorie). Zahlenmittel des Molekulargewichts war (nach GPC-Lichtstreuung) 30000.

### Beispiele 8 bis 9: Polymeranaloge Umsetzung der aromatischen Polyethersulfone

### Beispiel 8: Polymeranaloge Methylaryletherspaltung von Poly[oxy-1,4-methoxy-phenylen-oxy-1,4-phenylen-sulfonyl-1,4-phenylen] mit Natriumcyanid (allgemeine Arbeitsvorschrift)

In frisch umkondensiertem DMSO wurde unter Stickstoff eine 14 %ige Lösung des methoxylierten Polyetherethersulfons hergestellt. Danach wurde die berechnete Menge NaCN zugegeben. Anschließend wurde die Mischung schnell auf die gewünschte Temperatur gebracht.
Nach der Reaktion wurde die Reaktionslösung bis zu Hydroxylierungsgraden von etwa 50 % im zehnfachen Volumen Wasser/Ethanol (1:1) gefällt. Das Produkt wurde filtriert und noch zweimal in einem Gemisch aus Wasser und Ethanol und einmal in Ethanol eine Stunde zum Sieden erhitzt, filtriert und anschließend unter Vakuum bis zur Druckkonstanz getrocknet.
Bei höheren Hydroxylierungsgraden wurde die Lösung mit dem fünffachen Volumen Wasser verdünnt. Die so verdünnte Lösung wurde gegen Wasser dialysiert, bis die Mutterlauge neutral war. Danach wurde die Produktlösung durch Ansäuern mit Salzsäure ausgefällt. Das Produkt wurde filtriert, trockengesogen und bis zur Druckkonstanz getrocknet.
Die cyanidhaltigen Mutterlaugen mussten mit Eisen(II)sulfat behandelt werden, um das Cyanid zu fällen und getrennt zu entsorgen.

### Beispiel 9: Synthese von Poly[oxy-1,4-hydroxyphenylen-oxy-1,4-phenylensulfonyl-1,4-phenylen

| | | |
|---|---|---|
| Ansatz: | 40 g | 0,113 mol pro Wiederholungseinheit des methoxylierten Polyetherethersulfons (MPEES) |
| | 5,53 g | 0,113 mol NaCN |
| | 250 ml | DMSO |

Die Durchführung erfolgte nach der in Beispiel 8 beschriebenen allgemeinen Arbeitsvorschrift. Die Reaktionszeit betrug 5 h bei einer Temperatur von 125 °C. Die Ausbeute war 33 g (83 % der Theorie). Das Zahlenmittel des Molekulargewichts betrug (nach GPC-Lichtstreuung) 16000. Der Hydroxylierungsgrad des Produktes war 26 %.

## Patentansprüche

1. Verfahren zur Herstellung von hydrophilen aromatischen Polyethersulfonen, indem zunächst ein aromatisches Polyethersulfon durch Polykondensation von zweiwertigen d.h. jeweils zwei Funktionalitäten für eine Kondensationsreaktion zur Verfügung stellenden, hydroxylierten und/oder halogenierten aromatischen Verbindungen als Reaktionspartner, von denen mindestens ein Reaktionspartner eine Sulfongruppe enthält und mindestens ein Reaktionspartner mit einer oder mehreren Alkoxygruppen am aromatischen Ring oder an den aromatischen Ringen substituiert ist, hergestellt wird, **dadurch gekennzeichnet, dass** zumindestens ein Teil der Alkoxygruppen des entstandenen aromatischen Polyethersulfons anschließend durch polymeranaloge Umsetzung zu Hydroxylgruppen gespalten wird.

2. Verfahren nach Anspruch 1, **dadurch gekennzeichnet, dass** die Polykondensation in einem Lösungsmittelsystem bestehend aus einer dipolar aprotischen und einer unpolaren aromatischen Verbindung durchgeführt wird.

3. Verfahren nach Anspruch 2, **dadurch gekennzeichnet, dass** das Lösungsmittelsystem ein Dimethylacetamid/Toluol und/oder ein Sulfolan/Chlorbenzol Gemisch ist.

4. Verfahren nach einem oder mehreren der Ansprüche 1 bis 3, **dadurch gekennzeichnet, dass** die Polykondensation in Gegenwart von Carbonaten durchgeführt wird.

5. Verfahren nach Anspruch 4, **dadurch gekennzeichnet, dass** die Carbonate Metallcarbonate der ersten Gruppe des Periodensystems sind.

6. Verfahren nach einem oder mehreren der Ansprüche 1 bis 5, **dadurch gekennzeichnet, dass** als zweiwertige, hydroxylierte aromatische Verbindung Verbindungen der folgenden allgemeinen Formel eingesetzt werden: 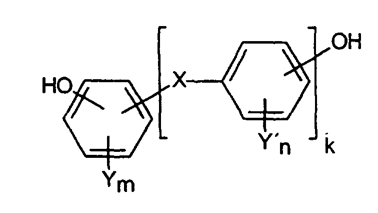 worin:
X eine direkte Bindung, -O-, -S-, - SO₂-, -CO-, CH₂-, -C(CH₃)₂-, -C(CF₃)₂- ist,
Y und Y' unabhängig voneinander Alkoxygruppen mit jeweils 1 bis 8, bevorzugt 1-4 C-Atomen, besonders bevorzugt Methoxygruppen, sind,
m und n unabhängig voneinander = 0, 1, 2, 3 oder 4 sind,
und k = 0, 1 oder 2 ist.

7. Verfahren nach einem oder mehreren der Ansprüche 1 bis 6, **dadurch gekennzeichnet, dass** als zweiwertige, hydroxylierte aromatische Verbindung ein gegebenenfalls Alkoxygruppen enthaltenes Bis[4-hydroxyphenyl]sulfon und/oder Hydrochinon eingesetzt wird.

8. Verfahren nach einem oder mehreren der Ansprüche 1 bis 7, **dadurch gekennzeichnet, dass** als zweiwertige, halogenierte aromatische Verbindung Verbindungen der folgenden allgemeinen Formel eingesetzt werden: 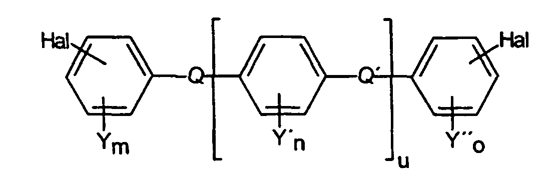 worin:
Hal gleiche oder verschiedene Halogenatome, bevorzugt Fluor oder Chlor, in p- oder o-Stellung sind,
Y, Y' und Y'' unabhängig voneinander Alkoxygruppen mit jeweils 1 bis 8, bevorzugt 1-4 C-Atomen , besonders bevorzugt Methoxygruppen, sind,
m, n und o unabhängig voneinander = 0, 1, 2, 3 oder 4 sind,
Q und Q' = -CO- und/oder -SO₂-Gruppen sind,
u = 0, 1 oder 2 ist.

9. Verfahren nach einem oder mehreren der Ansprüche 1 bis 5, **dadurch gekennzeichnet, dass** als zweiwertige, halogenierte aromatische Verbindung ein gegebenenfalls Alkoxygruppen enthaltenes Bis[4-halogenphenyl]sulfon eingesetzt wird.

10. Verfahren nach einem oder mehreren der Ansprüche 1 bis 5, **dadurch gekennzeichnet, dass** das aromatische Polyethersulfon durch Polykondensation von Bis[4-hydroxyphenyl]sulfon mit methoxyliertem Bis[4-chlorphenyl]sulfon und/oder methoxyliertem Bis[4-fluorphenyl]sulfon hergestellt wird.

11. Verfahren nach einem oder mehreren der Ansprüche 1 bis 5, **dadurch gekennzeichnet, dass** das aromatische Polyethersulfon durch Polykondensation von Methoxyhydrochinon mit Bis[4-chlorphenyl]sulfon und/oder Bis[4-fluorphenyl]sulfon hergestellt wird.

12. Verfahren nach einem oder mehreren der Ansprüche 1 bis 5, **dadurch gekennzeichnet, dass** das aromatische Polyethersulfon durch Polykondensation von hydroxytelechelem Polyethersulfon mit fluortelechelem, methoxylierten Polyetherethersulfon hergestellt wird.

13. Verfahren nach einem oder mehreren der Ansprüche 1 bis 12, **dadurch gekennzeichnet, dass** die polymeranaloge Umsetzung mit Cyaniden durchgeführt wird.

14. Verfahren nach Anspruch 13, **dadurch gekennzeichnet, dass** die Cyanide Metallcyanide der ersten Gruppe des Periodensystems sind.

15. Verfahren nach einem oder mehreren der Ansprüche 1 bis 14, **dadurch gekennzeichnet, dass** die polymeranaloge Umsetzung in einem dipolar aprotischen Lösungsmittel durchgeführt wird.

16. Verfahren nach einem oder mehreren der Ansprüche 1 bis 15, **dadurch gekennzeichnet, dass** die polymerananloge Umsetzung bis zu einem Hydroxylierungsgrad, als das prozentuale Verhältnis aus der Anzahl der Hydroxylgruppen zu der Anzahl der Wiederholungseinheiten im hydrophilen Polyethersulfon, von 0,1 bis 90 % durchgeführt wird.

17. Verfahren nach einem oder mehreren der Ansprüche 1 bis 15, **dadurch gekennzeichnet, dass** die polymerananloge Umsetzung bis zu einem Hydroxylierungsgrad, als das prozentuale Verhältnis aus der Anzahl der Hydroxylgruppen zu der Anzahl der Wiederholungseinheiten im hydrophilen Polyethersulfon, von 2 bis 40 % durchgeführt wird.

18. Hydrophile aromatische Polyethersulfone, **dadurch gekennzeichnet, dass** sie Hydroxylgruppen als Substituenten an zumindestens einem Teil der aromatischen Gruppen in den Wiederholungseinheiten enthalten.

19. Hydrophile aromatische Polyethersulfone nach Anspruch 18, **dadurch gekennzeichnet, dass** der Hydroxylierungsgrad, als das prozentuale Verhältnis aus der Anzahl der Hydroxylgruppen zu der Anzahl der Wiederholungseinheiten im hydrophilen Polyethersulfon, zwischen 0,1 und 90 % liegt.

20. Hydrophile aromatische Polyethersulfone nach Anspruch 19, **dadurch gekennzeichnet, dass** der Hydroxylierungsgrad, als das prozentuale Verhältnis aus der Anzahl der Hydroxylgruppen zu der Anzahl der Wiederholungseinheiten im hydrophilen Polyethersulfon, zwischen 2 und 40 % liegt.

21. Hydrophile aromatische Polyethersulfone nach einem oder mehreren der Ansprüche 18 bis 20, **dadurch gekennzeichnet, dass** die hydrophilen aromatischen Polyethersulfone Alkoxygruppen als Substituenten an zumindestens einem Teil der aromatischen Gruppen in den Wiederholungseinheiten enthalten.

22. Hydrophile aromatische Polyethersulfone nach Anspruch 21, **dadurch gekennzeichnet, dass** es sich bei den Alkoxygruppen um Methoxygruppen handelt.

23. Hydrophile aromatische Polyethersulfone nach einem oder mehreren der Ansprüche 18 B bis 22, **dadurch gekennzeichnet, dass** die hydrophilen aromatischen Polyethersulfone als Strukturelement eine Gruppe der Formel 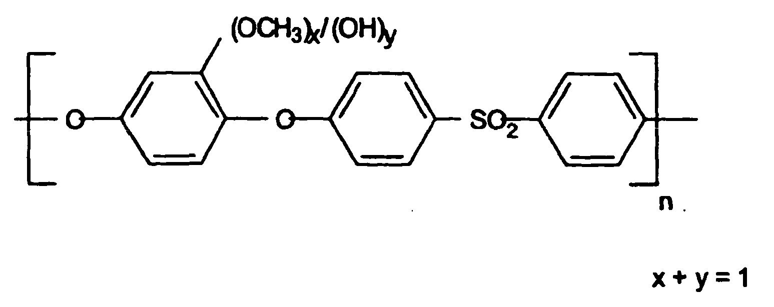 enthalten, wobei x + y = 1 bedeutet, dass pro Wiederholungseinheit entweder eine Methoxy - oder eine Hydroxygruppe vorliegt.

24. Hydrophile aromatische Polyethersulfone herstellbar nach einem oder mehreren der Ansprüche 1 bis 17.

25. Synthetische Membran enthaltend ein hydrophiles aromatisches Polyethersulfon nach einem oder mehreren der Ansprüche 18 bis 24.

## Claims

1. Process for producing hydrophilic aromatic polyether sulfones, whereby initially an aromatic polyether sulfone is produced through polycondensation of divalent, i.e., having two functionalities available for a condensation reaction, hydroxylated and/or halogenated aromatic compounds as reaction partners, of which at least one reaction partner contains a sulfone group and at least one reaction partner is substituted with one or more alkoxy groups on the aromatic ring, **characterized in that** at least a part of the alkoxy groups of the resulting aromatic polyether sulfone is subsequently cleaved by polymer-analog reaction into hydroxyl groups.

2. Process according to Claim 1, **characterized in that** the polycondensation is conducted in a solvent system consisting of a dipolar, aprotic compound and a nonpolar, aromatic compound.

3. Process according to Claim 2, **characterized in that** the solvent system is a dimethylacetamide/toluene mixture and/or a sulfolane/chlobenzene mixture.

4. Process according to one or more of Claims 1 to 3, **characterized in that** the polycondensation is conducted in the presence of carbonates.

5. Process according to Claim 4, **characterized in that** the carbonates are metal carbonates of the first group of the periodic table.

6. Process according to one or more of Claims 1 to 5, **characterized in that** compounds of the following general formula are used as the divalent, hydroxylated aromatic compound: 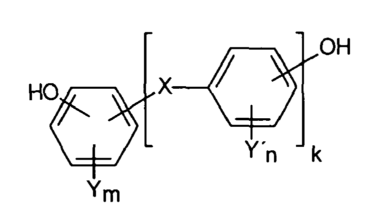 wherein:
X represents a direct bond, -O-, -S-, -SO₂-, -CO-, -CH₂-, -C(CH₃)₂-, -C(CF₃)₂-,
Y and Y' independently of one another represent alkoxy groups with respectively 1 to 8, preferably 1 to 4 C-atoms, more preferably methoxy groups,
m and n are independently of one another = 0, 1, 2, 3 or 4, and
k = 0, 1 or 2.

7. Process according to one or more of Claims 1 to 6, **characterized in that** bis-(4-hydroxyphenyl) sulfone, possibly containing alkoxy groups, and/or hydroquinone is/are used as the divalent, hydroxylated aromatic compound.

8. Process according to one or more of Claims 1 to 7, **characterized in that** compounds of the following general formula are used as the divalent, halogenated aromatic compound: 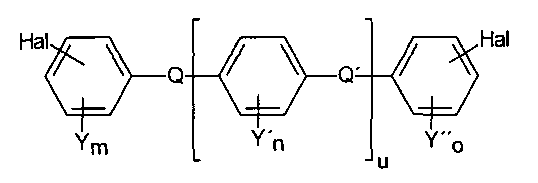 wherein:
Hal represents similar or different halogen atoms, preferably fluorine or chlorine, in p- or o-position,
Y, Y' and Y" independently of one another represent alkoxy groups with respectively 1 to 8, preferably 1 to 4 C-atoms, more preferably methoxy groups,
m, n and o are independently of one another = 0, 1, 2, 3 or 4,
Q and Q' are -CO- and/or -SO₂-groups,
u=0, 1 or 2.

9. Process according to one or more of Claims 1 to 5, **characterized in that** bis-(4-halogen-phenyl) sulfone, possibly containing alkoxy groups, is used as the divalent, halogenated aromatic compound.

10. Process according to one or more of Claims 1 to 5, **characterized in that** the aromatic polyether sulfone is produced through polycondensation of bis-(4-hydroxyphenyl) sulfone with methoxylated bis-(4-chlorophenyl) sulfone and/or methoxylated bis-(4-fluorophenyl) sulfone.

11. Process according to one or more of Claims 1 to 5, **characterized in that** the aromatic polyether sulfone is produced through polycondensation of methoxyhydroquinone with bis-(4-chlorophenyl) sulfone and/or bis-(4-fluorophenyl) sulfone.

12. Process according to one or more of Claims 1 to 5, **characterized in that** the aromatic polyether sulfone is produced through polycondensation of hydroxytelechelic polyether sulfone with fluorotelechelic, methoxylated polyether ether sulfone.

13. Process according to one or more of Claims 1 to 12, **characterized in that** the polymer-analog reaction is conducted with cyanides.

14. Process according to Claim 13, **characterized in that** the cyanides are metal cyanides of the first group of the periodic table.

15. Process according to one or more of Claims 1 to 14, **characterized in that** the polymer-analog reaction is conducted in a dipolar, aprotic solvent.

16. Process according to one or more of Claims 1 to 15, **characterized in that** the polymer-analog reaction is conducted up to a hydroxylation level of 0.1 to 90%, given as the percental ratio of the number of hydroxyl groups to the number of repeating units in the hydrophilic polyethersulfone.

17. Process according to one or more of Claims 1 to 15, **characterized in that** the polymer-analog reaction is conducted up to a hydroxylation level of 2 to 40%, given as the percental ratio of the number of hydroxyl groups to the number of repeating units in the hydrophilic polyethersulfone.

18. Hydrophilic, aromatic polyether sulfones, **characterized in that** they contain hydroxyl groups as substituents on at least a part of the aromatic groups in the repeating units.

19. Hydrophilic, aromatic polyether sulfones according to Claim 18, **characterized in that** the hydroxylation level lies between 0.1 and 90%, given as the percental ratio of the number of hydroxyl groups to the number of repeating units in the hydrophilic polyethersulfone.

20. Hydrophilic, aromatic polyether sulfones according to Claim 19, **characterized in that** the hydroxylation level lies between 2 and 40%, given as the percental ratio of the number of hydroxyl groups to the number of repeating units in the hydrophilic polyethersulfone.

21. Hydrophilic, aromatic polyether sulfones according to one or more of Claims 18 to 20, **characterized in that** the hydrophilic, aromatic polyether sulfones contain alkoxy groups as substituents on at least a part of the aromatic groups in the repeating units.

22. Hydrophilic, aromatic polyether sulfones according to Claim 21, **characterized in that** the alkoxy groups are methoxy groups.

23. Hydrophilic, aromatic polyether sulfones according to one or more of Claims 18 to 22, **characterized in that** the hydrophilic, aromatic polyether sulfones contain a group of the formula 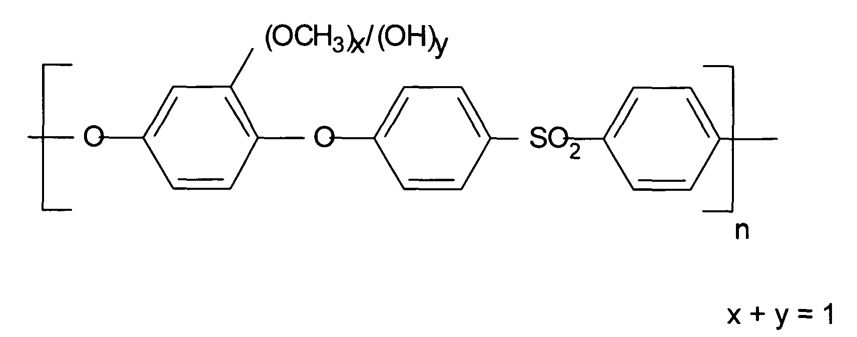 as a structural element, wherein x + y = 1 means, that either one methoxy group or one hydroxy group is present per repeating unit.

24. Hydrophilic, aromatic polyether sulfones obtainable according to one or more of Claims 1 to 17.

25. Synthetic membrane comprising a hydrophilic, aromatic polyether sulfone according to one or more of Claims 18 to 24.

## Revendications

1. Procédé de préparation de poly(éther sulfone) aromatiques hydrophiles, dans lequel on prépare d'abord une poly(éther sulfone) par polycondensation de composés aromatiques hydroxylés et/ou halogénés divalents, c'est-à-dire disposant chacun de deux fonctions appropriées pour une réaction de condensation, utilisés comme partenaires de réaction, parmi lesquels il y a au moins un partenaire de réaction qui contient un groupe sulfonyle et au moins un partenaire de réaction dont le cycle aromatique ou les cycles aromatiques porte(nt) un ou plusieurs substituant(s) alcoxy, **caractérisé en ce qu'**au moins une partie des groupes alcoxy de la poly(éther sulfone) aromatique formée sont ensuite scindés en groupes hydroxyle par réaction conservant un polymère analogue.

2. Procédé conforme à la revendication 1, **caractérisé en ce que** la polycondensation est effectuée dans un système solvant constitué d'un composé dipolaire aprotique et d'un composé aromatique non-polaire.

3. Procédé conforme à la revendication 2, **caractérisé en ce que** le système solvant est un mélange de diméthylacétamide et de toluène et/ou un mélange de sulfolane et de chlorobenzène.

4. Procédé conforme à l'une ou plusieurs des revendications 1 à 3, **caractérisé en ce que** la polycondensation est effectuée en présence de carbonates.

5. Procédé conforme à la revendication 4, **caractérisé en ce que** les carbonates sont des carbonates de métaux du premier groupe du système périodique.

6. Procédé conforme à l'une ou plusieurs des revendications 1 à 5, **caractérisé en ce qu'**on utilise, en tant que composés aromatiques hydroxylés divalents, des composés de formule générale suivante : 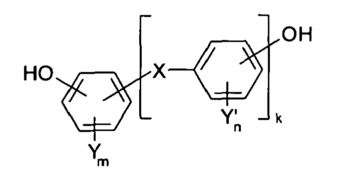 dans laquelle :
- X représente une liaison directe ou un chaînon de formule -O-, -S-, -SO₂- -CO-, -CH₂-, -C(CH₃)₂- ou -C(CF₃)₂-,
- Y et Y' représentent chacun, indépendamment l'un de l'autre, un groupe alcoxy comportant 1 à 8 et de préférence 1 à 4 atomes de carbone, et en particulier un groupe méthoxy,
- les indices m et n valent chacun, indépendamment l'un de l'autre, 0, 1, 2, 3 ou 4,
- et l'indice k vaut 0, 1 ou 2.

7. Procédé conforme à l'une ou plusieurs des revendications 1 à 6, **caractérisé en ce qu'**on utilise, en tant que composés aromatiques hydroxylés divalents, une bis(4-hydroxyphényl)sulfone et/ou une hydroquinone, qui comporte(nt) éventuellement des groupes alcoxy.

8. Procédé conforme à l'une ou plusieurs des revendications 1 à 7, **caractérisé en ce qu'**on utilise, en tant que composés aromatiques halogénés divalents, des composés de formule générale suivante : 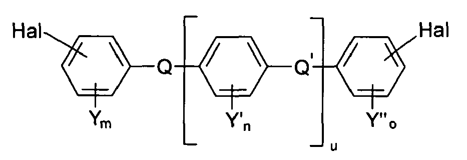 dans laquelle :
- les symboles Hal représentent des atomes d'halogène, identiques ou différents, de préférence des atomes de fluor ou de chlore, placés en position para ou ortho,
- Y, Y' et Y" représentent chacun, indépendamment l'un de l'autre, un groupe alcoxy comportant 1 à 8 et de préférence 1 à 4 atomes de carbone, et en particulier un groupe méthoxy,
- les indices m, n et o valent chacun, indépendamment l'un de l'autre, 0, 1, 2, 3 ou 4,
- Q et Q' représentent des chaînons de formule -SO₂- et/ou -CO-,
- et l'indice u vaut 0, 1 ou 2.

9. Procédé conforme à l'une ou plusieurs des revendications 1 à 5, **caractérisé en ce qu'**on utilise, en tant que composé aromatique halogéné divalent, une bis(4-halogénophényl)sulfone, qui comporte éventuellement des groupes alcoxy.

10. Procédé conforme à l'une ou plusieurs des revendications 1 à 5, **caractérisé en ce qu'**on prépare une poly(éther sulfone) aromatique par polycondensation de bis(4-hydroxyphényl)sulfone et de bis(4-chlorophényl)-sulfone méthoxylée et/ou de bis(4-fluorophényl)sulfone méthoxylée.

11. Procédé conforme à l'une ou plusieurs des revendications 1 à 5, **caractérisé en ce qu'**on prépare une poly(éther sulfone) aromatique par polycondensation de méthoxy-hydroquinone et de bis(4-chlorophényl)sulfone et/ou de bis(4-fluorophényl)sulfone.

12. Procédé conforme à l'une ou plusieurs des revendications 1 à 5, **caractérisé en ce qu'**on prépare une poly(éther sulfone) aromatique par polycondensation de poly(éther sulfone) hydroxy-téléchélique et de poly(éther éther sulfone) méthoxylée fluoro-téléchélique.

13. Procédé conforme à l'une ou plusieurs des revendications 1 à 12, **caractérisé en ce que** la réaction conservant un polymère analogue est effectuée avec des cyanures.

14. Procédé conforme à la revendication 13, **caractérisé en ce que** les cyanures sont des cyanures de métaux du premier groupe du système périodique.

15. Procédé conforme à l'une ou plusieurs des revendications 1 à 14, **caractérisé en ce que** la réaction conservant un polymère analogue est effectuée dans un solvant dipolaire aprotique.

16. Procédé conforme à l'une ou plusieurs des revendications 1 à 15, **caractérisé en ce que** la réaction conservant un polymère analogue est poursuivie jusqu'à l'obtention d'un degré d'hydroxylation, donné par le pourcentage du nombre de groupes hydroxyle rapporté au nombre de motifs répétés dans la poly(éther sulfone) hydrophile, de 0,1 à 90 %.

17. Procédé conforme à l'une ou plusieurs des revendications 1 à 15, **caractérisé en ce que** la réaction conservant un polymère analogue est poursuivie jusqu'à l'obtention d'un degré d'hydroxylation, donné par le pourcentage du nombre de groupes hydroxyle rapporté au nombre de motifs répétés dans la poly(éther sulfone) hydrophile, de 2 à 40 %.

18. Poly(éther sulfone) aromatique hydrophile, **caractérisée en ce qu'**elle porte des groupes hydroxyle, en tant que substituants, sur au moins une partie des groupes aromatiques présents dans les motifs répétés.

19. Poly(éther sulfone) aromatique hydrophile, conforme à la revendication 18, **caractérisée en ce que** son degré d'hydroxylation, donné par le pourcentage du nombre de groupes hydroxyle rapporté au nombre de motifs répétés dans la poly(éther sulfone) hydrophile, vaut de 0,1 à 90 %.

20. Poly(éther sulfone) aromatique hydrophile, conforme à la revendication 19, **caractérisée en ce que** son degré d'hydroxylation, donné par le pourcentage du nombre de groupes hydroxyle rapporté au nombre de motifs répétés dans la poly(éther sulfone) hydrophile, vaut de 2 à 40 %.

21. Poly(éther sulfone) aromatique hydrophile, conforme à l'une ou plusieurs des revendications 18 à 20, **caractérisée en ce qu'**elle porte des groupes alcoxy, en tant que substituants, sur au moins une partie des groupes aromatiques présents dans les motifs répétés.

22. Poly(éther sulfone) aromatique hydrophile, conforme à la revendication 21, **caractérisée en ce que** les groupes alcoxy sont des groupes méthoxy.

23. Poly(éther sulfone) aromatique hydrophile, conforme à l'une ou plusieurs des revendications 18 à 22, **caractérisée en ce qu'**elle contient, en tant que motif structural, un groupe de formule 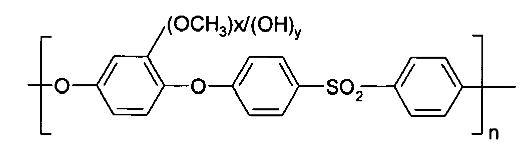 avec x + y = 1, ce qui signifie que, dans chaque motif répété, il y a soit un groupe méthoxy, soit un groupe hydroxy.

24. Poly(éther sulfone) aromatique hydrophile, accessible par un procédé conforme à l'une ou plusieurs des revendications 1 à 17.

25. Membrane synthétique contenant une poly(éther sulfone) aromatique hydrophile conforme à l'une ou plusieurs des revendications 18 à 24.
